Europäisches Patentamt

European Patent Office

Office européen des brevets

(11) Veröffentlichungsnummer : **0 046 866**
**B1**

(12) **EUROPÄISCHE PATENTSCHRIFT**

(45) Veröffentlichungstag der Patentschrift :
17.10.84

(21) Anmeldenummer : 81105623.3

(22) Anmeldetag : 17.07.81

(51) Int. Cl.³ : **F 16 J 15/32, H 01 M 2/00**

(54) **Lippendichtung.**

(30) Priorität : 28.08.80 DE 3032445

(43) Veröffentlichungstag der Anmeldung :
**10.03.82 Patentblatt 82/10**

(45) Bekanntmachung des Hinweises auf die Patenterteilung : **17.10.84 Patentblatt 84/42**

(84) Benannte Vertragsstaaten :
**BE FR GB IT LU NL SE**

(56) Entgegenhaltungen :
**DE-A- 2 314 770**
**DE-A- 2 706 016**
**DE-A- 2 850 394**
**DE-C- 2 607 519**
**DE-U- 1 643 777**
**DE-U- 1 981 067**

(73) Patentinhaber : **Accumulatorenwerke Hoppecke Carl Zoellner & Sohn GmbH & Co. KG**
**Bontkirchener Strasse 1 Postfach 1140**
**D-5790 Brilon 2 (DE)**

(72) Erfinder : **Ruch, Jean, Dr.**
**An der Lanfert 8**
**D-5790 Brilon 1 (DE)**
Erfinder : **Nelles, Josef**
**Ringstrasse 6**
**D-5778 Meschede 12 (DE)**

(74) Vertreter : **Stenger, Alex, Dipl.-Ing. et ai**
**Patentanwälte Dipl.-Ing. A. Stenger Dipl.-Ing. W. Watzke Dipl.-Ing. H.J. Ring Kaiser-Friedrich-Ring 70**
**D-4000 Düsseldorf 11 (DE)**

Jouve, 18, rue St-Denis, 75001 Paris, France

## Beschreibung

Die Erfindung betrifft eine Lippendichtung gemäß dem Oberbegriff im Anspruch 1.

Eine galvanische Metall-Luft-Zelle besteht aus einer verbrauchbaren Metall-Elektrode und einer Luftelektrode, deren Abstand im Betrieb konstant gehalten wird durch Nachführen der Metallelektrode. Zwischen den Elektroden befindet sich ein Elektrolytraum, durch den Elektrolyt, insbesondere Kalilauge, geführt wird. Wesentlich ist bei einer solchen galvanischen Zelle, daß die verbrauchbare Metall-Elektrode derart abgedichtet in den Flüssigkeitsraum hereinragt, daß deren Stirnfläche die alleinige Arbeitsfläche ist. Zu diesem Zweck ist es bekannt, eine elastische Lippendichtung zu verwenden, die eine konisch verlaufende Innenfläche aufweist, um eine scharfe Dichtkante zum Elektrolytraum hin auszubilden, welche lippenartig fest die verbrauchbare Elektrode umschließt (DE-C-26 07 519).

Nachteiligerweise ist die gewünschte Abdichtung des Flüssigkeitsraums im Dauerbetrieb mit der bekannten Dichtung nicht gewährleistet. Durch die Elektrolytbewegung und örtliche hohe Reaktionstemperaturen kommt es im Dichtungsbereich zu Korrosionen derart, daß die Flüssigkeit die Dichtung unterwandern kann. Dies Verhalten wird gefördert durch Unreinheiten im Elektrodenmaterial, die zu Lochfraß oder Fehlstellen führen können. Eine weitere Einflußgröße ist die Oberflächenbeschaffenheit der Metallelektrode. Um eine einwandfreie Abdichtung zu erhalten, ist es erforderlich, die Oberfläche zu polieren, wobei selbst die ursprünglichen Drehriefen unter dem Einfluß des Elektrolyten nach einer gewissen Zeit wieder auftreten. Insgesamt ließ sich daher eine befriedigende Betriebsdauer der galvanischen Zelle nicht regelmäßig erzielen, da durch die auftretenden Undichtigkeiten Schäden durch den Elektrolyten verursacht werden, die zum Ausfall der Zelle führen.

Der Erfindung liegt die Aufgabe zugrunde, eine verbesserte Lippendichtung zur Abdichtung einer axial beweglichen Elektrode gegenüber einem Flüssigkeitsraum einer galvanischen Zelle der oben beschriebenen Art zu schaffen, deren Dichtwirkung langzeitig gewährleistet ist. Die beschriebenen Nachteile sollen vermieden werden.

Die Aufgabe wird erfindungsgemäß durch die kennzeichnenden Merkmale des Anspruchs 1 gelöst. Vorteilhafterweise ist die Schutzlippe einstückig mit der Lippendichtung ausgebildet und paßt sich aufgrund ihrer Eigenspannung oder Vorspannung mit hoher Flächenpreßkraft an die Oberfläche der abzudichtenden Elektrode an. Die mit dieser Dichtung erzielten hervorragenden Ergebnisse — bisher kein Ausfall einer galvanischen Zelle über die gesamte Lebensdauer der verbrauchbaren Elektrode — beruhen darauf, daß die Schutzlippe die wesentlichen Korrosionseinflüsse nicht zur Wirkung kommen läßt. So wird beispielsweise die Auswirkung der Elektrolytbewegung auf den Dichtungsbereich nahezu völlig ausgeschaltet. Die Korrosionsgeschwindigkeit selbst durch den Elektrolyten wird entscheidend dadurch herabgesetzt, daß sich unterhalb der Schutzlippe eine außerordentlich dünne Schicht an Elektrolyten ausbildet, die schnell an dem verbrauchbaren Metall gesättigt ist und damit ihre Aggressivität verliert.

Die Vorspannung der Schutzlippe kann konstruktiv mehr oder weniger stark eingestellt werden, indem am Übergang vom Dichtkamm zur Schutzlippe eine die Elastizität beeinflussende Hinterschneidung vorgesehen wird. Eine weitere Einflußmöglichkeit ist durch die Wahl der Erstreckungsrichtung der Schutzlippe im entlasteten Zustand gegeben. Je stärker die Einwinkelung der Schutzlippe im entlasteten Zustand im Vergleich zu ihrer Erstreckungsrichtung im Einbauzustand ist, desto stärker ist die Vorspannung. Erfindungsgemäß ist vorgeschlagen, eine Hinterschneidung vorzusehen und die Erstreckungsrichtung parallel zu der der Dichtlippe im entlasteten Zustand auszubilden. Dabei wird die Schutzlippe nach außen keilförmig dünner und hat eine vorspringende Länge von zwischen 1/5 und 1/20 des Durchmessers der Elektrode.

Eine weitere Verbesserung der Dichtwirkung wird gemäß einer zweckmäßigen Ausgestaltung der Erfindung dadurch erreicht, daß eine Mehrfachabdichtung hintereinander vorgesehen ist, indem die Lippendichtung als im Querschnitt dachförmige Doppellippendichtung mit Schutzlippe ausgebildet ist. Hierdurch ergibt sich zunächst die Flächenabdichtung mit Sättigungsraum an der Schutzlippe, sodann eine Liniendichtung entlang dem Dichtkamm der ersten Dichtlippe, sodann ein weiterer Sättigungsraum innerhalb des Dachquerschnitts und abschließend eine weitere Liniendichtung entlang des Dichtkamms der zweiten Dichtlippe. Mit dieser Ausführungsform wird der wesentliche Vorteil erzielt, daß auch mit unreineren Elektrodenmaterialien, beispielsweise Aluminium 98-prozentiger Reinheit gearbeitet werden kann und daß auf die polierende Bearbeitung der Oberfläche verzichtet werden kann. Dies ist ein wesentlicher wirtschaftlicher Vorteil.

Normalerweise sind die erfindungsgemäßen Lippendichtungen ringförmig. Auch andere Formgebungen sind jedoch denkbar, wobei jedoch darauf zu achten ist, daß gleiche radiale Andruckkräfte durch die Formgebung in Anpassung an die abzudichtenden Oberflächen eingestellt werden.

Es ist vorteilhaft, den zur Befestigung im Gehäuse vorgesehenen Ringflansch der Lippendichtung als äußere Mehrfachdichtung mit mehreren hintereinander angeordneten Dichtkämman auszubilden. Als Werkstoff kommt in der bevorzugten Anwendung der erfindungsgemäßen Lippendichtung an einer Metall-Luft-Zelle der eingangs genannten Art EPTM (int. Bezeich.) zur Anwendung.

Weitere Einzelheiten, Merkmale und Vorteile des Gegenstands der Erfindung ergeben sich aus der nachfolgenden Beschreibung der zugehörigen Zeichnung, in der mehrere Ausführungsbeispiele einer erfindungsgemäßen Lippendichtung schematisch dargestellt sind. In der Zeichnung zeigt :

Figur 1 eine Draufsicht auf eine Lippendichtung,

Figur 2 einen Schnitt gemäß Linie I-I der Fig. 1,

Figur 3 eine geänderte Ausführungsform einer Lippendichtung in Draufsicht,

Figur 4 einen Schnitt gemäß Linie III-III der Fig. 3 und

Figur 5 eine Metall-Luft-Zelle mit Lippendichtung in auseinandergezogener perspektivischer Darstellung.

Die Lippendichtung 1 besteht aus gummielastischem Werkstoff, der zu einem im wesentlichen dachförmigen Querschnitt derart geformt ist, daß zwei Dichtlippen 2, 3 mit schneidenartigen Dichtkämmen 4, 5 sowie auf der gegenüberliegenden Seite in Ringbund 6 zur Positionierung in einem nicht dargestellten Gehäuse vorliegen. Vor dem Dichtkamm 4 der Dichtlippe 2, d. h. im Einbauzustand flüssigkeitsseitig, ist einstückig mit der Lippendichtung 1 eine membranartige Schutzlippe 7 ausgebildet. Der Übergang vom Dichtkamm 4 zur Schutzlippe 7 ist mit einer Hinterschneidung 8 durchgeführt, die ein elastisches Wegbiegen der Schutzlippe 7 aus der dargestellten Erstreckungsrichtung um 90° nach außen unter Aufbau einer Vorspannung erleichtert.

Die Schutzlippe verjüngt sich nach vorn keilförmig und hat im dargestellten Ausführungsbeispiel eine vorspringende Länge von 1/10 des Innendurchmessers der Lippendichtung. Durch strichpunktierte senkrechte Linien ist angedeutet, daß je nach Anwendungszweck auch ein kürzerer Vorsprung zweckmäßig sein kann. Durch einfaches Abstanzen läßt sich die Schutzlippe entsprechend verkleinern.

Am Ringbund 6 sind flüssigkeitsseitig Dichtkanten 9, 10 und 11 zur Abdichtung des Flüssigkeitsraums gegenüber dem Gehäuse vorgesehen.

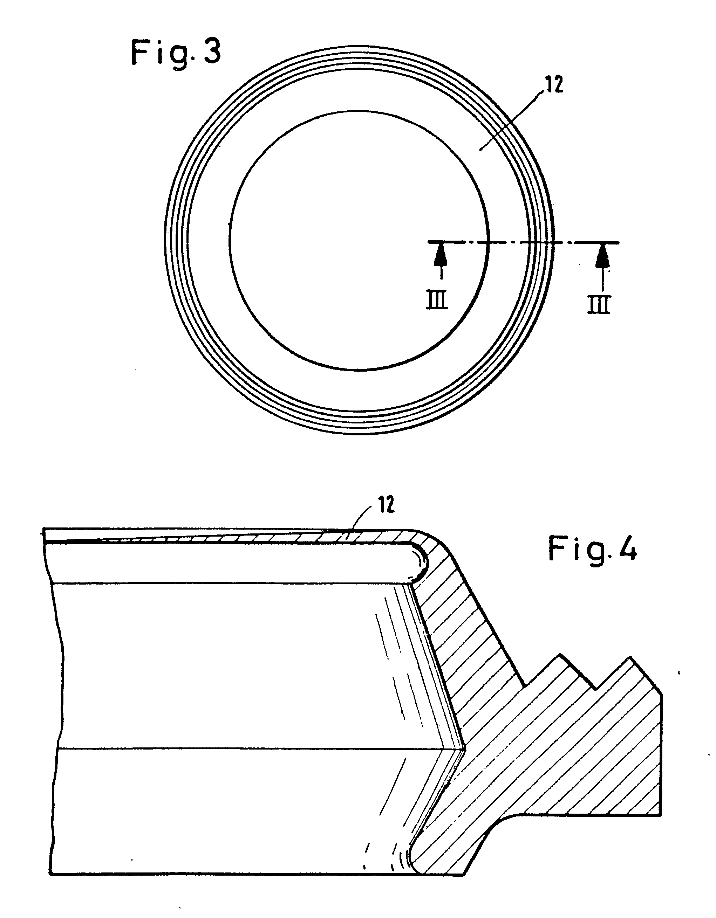

Die in den Fig. 3 und 4 dargestellte geänderte Ausführungsform einer Lippendichtung ist prinzipiell identisch aufgebaut, mit Ausnahme der gehäuseseitigen Dichtkanten und der gewählten Abmessungen. Bei dieser Lippendichtung springt die Schutzlippe um 1/5 des Innendurchmessers der Lippendichtung vor, so daß der im Einbauzustand abgedeckte Bereich vergrößert ist.

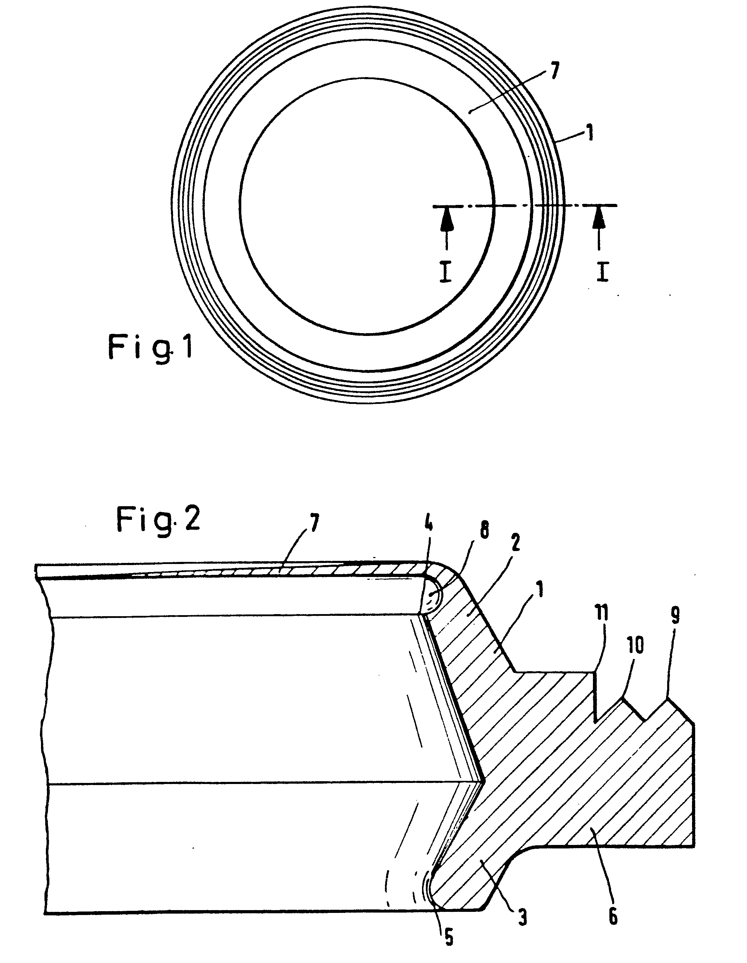

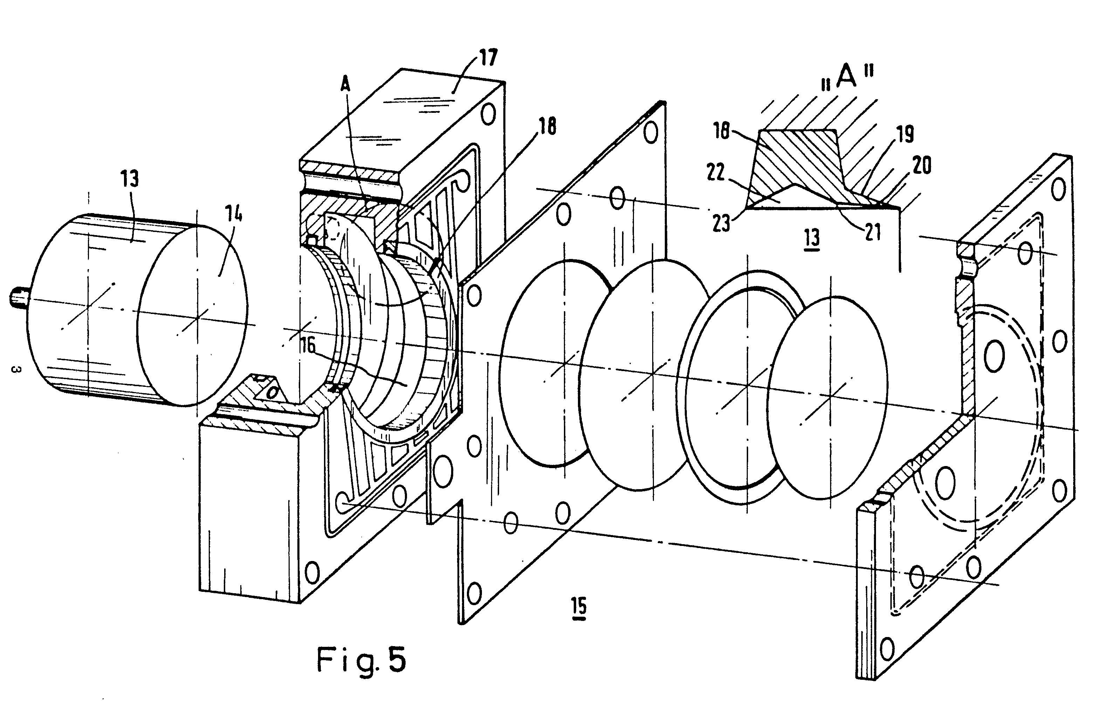

Eine in eine Metall-Luft-Zelle eingebaute Lippendichtung zeigt Fig. 5 der Zeichnung. Die Metall-Luft-Zelle besteht im wesentlichen aus einer zylindrisch geformten verbrauchbaren Aluminium-Elektrode 13, deren Stirnfläche 14 die alleinige Arbeitsfläche ist, sowie einer im Abstand dazu angeordneten Luftelektrode 15 und einem dazwischen angeordneten Elektrolytraum 16. Die Aluminium-Elektrode 13 ist nachschiebbar in einem Gehäuse 17 gelagert, in dessen Wandung eine Lippendichtung 18 der unter Bezugnahme auf die Fig. 1 bis 4 beschriebenen Art eingesetzt ist.

Der herausgezogenen Ausschnittzeichnung ist entnehmbar, daß die Lippendichtung 18 eine Schutzlippe 19 aufweist, die eng an der Oberfläche der Aluminium-Elektrode 13 unter Belassung eines sehr flachen Sättigungsraums 20 anliegt. Die Hinterschneidung der Lippendichtung geht über in einen ersten Dichtkamm 21, an den sich ein zweiter Sättigungsraum 22 und der zweite Dichtkamm 23 anschließen.

Auf diese Weise wird eine mehrfache Dichtwirkung aus flächigen und linienförmig wirkenden Dichtmitteln unter Belassung von Zwischenräumen erzielt, in denen eine Elektrolytanreicherung an Aluminium bis zur Sättigung zwecks Vermeidung einer weitergehenden Korrosion stattfinden kann. Die Schutzlippe 19 verhindert dabei aufgrund ihres dichten Aufliegens mit Spannung auf der Oberfläche der Aluminium-Elektrode jeglichen Angriff aufgrund der Elektrolytbewegung. Die Schutzlippe paßt sich der jeweiligen Gestalt der Oberfläche an. Trotz dieser Schutzwirkungen ist eine leichte Nachführbarkeit der Aluminium-Elektrode 13 gewährleistet. Es wird darauf hingewiesen, daß dies Problem beispielsweise bei Verwendung einer Stopfbuchse als Dichtung nicht lösbar war.

Die dargestellte Metall-Luft-Zelle arbeitete bis zum vollständigen Verbrauch der Aluminium-Elektrode, die einen Durchmesser von etwa 80 mm und eine Länge von etwa 200 mm hatte, ohne Einbuße der Dichtwirkung.

**Ansprüche**

1. Lippendichtung (1) an einer galvanischen Metall-Luft-Zelle zur Abdichtung der verbrauchbaren Metallelektrode (13) gegenüber dem Elektrolytraum der Zelle derart, daß die Stirnfläche (14) der Metallelektrode (13) alleinige Arbeitsfläche ist, bestehend aus gummielastischem Werkstoff mit einem schneidenartigen Dichtkamm (4), vor dem eine Schutzlippe (7) ausgebildet ist, dadurch gekennzeichnet, daß die Schutzlippe (7) sich im entlasteten Zustand in der gleichen Richtung wie der Dichtkamm (4) erstreckt und im Einbauzustand aus ihrer normalen Erstreckungsrichtung um 90° nach außen derart abgebogen ist, daß sie unter Eigenvorspannung flüssigkeitsseitig flächig auf der abzudichtenden Metallelektrode (13) mit hoher Flächenpreßkraft aufliegt, daß die Schutzlippe (7) membranartig nach außen keilförmig dünner gestaltet ist und eine vorspringende Länge von zwischen 1/5 und 1/20 des Durchmessers der Metallelektrode aufweist, daß der Übergang von der Schutzlippe (7) zum Dichtkamm (4) mit einer die Abbiegung ermöglichenden Hinterschneidung (8) versehen ist und daß hierdurch ein flacher erster Sättigungsraum (20) und ein sich daran anschließender zweiter Sättigungsraum (22) für den Elektrolyten gebildet sind.

2. Lippendichtung nach Anspruch 1, dadurch gekennzeichnet, daß die Schutzlippe (7 ; 19) einstückig mit der Lippendichtung (1 ; 18) ausgebildet ist und sich aufgrund ihrer Eigenspannung oder Vorspannung mit hoher Flächenpreßkraft an die Oberfläche der abzudichtenden Metallelektrode (13) anpaßt.

3. Lippendichtung nach einem der Ansprüche 1 oder 2, dadurch gekennzeichnet, daß die Schutzlippe (7) an einer im Querschnitt dachförmigen Doppellippendichtung ausgebildet ist.

4. Lippendichtung nach einem der Ansprüche 1 bis 3, dadurch gekennzeichnet, daß der zur Befestigung im Gehäuse (17) vorgesehene Ringflansch (6) als äußere Mehrfachdichtung mit mehreren hintereinander angeordneten Dichtkanten (9, 10, 11) ausgebildet ist.

## Claims

1. Lip seal (1) on a galvanic metal-air cell for sealing the consumable metal electrode (13) relative to the electrolyte space of the cell so that the front face (14) of the metal electrode (3) is the sole working surface, consisting of rubber elastic material with a knife edged sealing ridge (4) on which a protective lip (7) is provided, characterised in that the protective lip (7) extends in the relieved condition in the same direction as the sealing ridge (4) and in the incorporated condition is bent out of its normal direction of extension by 90° outwards in such a manner that, under its own tension, it lies on the liquid side surface of the metal electrode (13) to be sealed with a high surface pressure, in that the protective lip (7) is designed as a membrane conically thinner towards the outside and has a protruding length of between 1/5th and 1/20th of the diameter of the metal electrode, in that the transition from the protective lip (7) to the sealing ridge (4) is provided witth a rear cut (8) enabling deflection and in that, by this means, a flat first saturation space (20) and a second saturation space (22) connecting with it are formed for the electrolyte.

2. Lip seal according to Claim 1, characterised in that the protective lip (7 ; 19) is formed as one piece with the lip seal (1 ; 18) and, because of its inherent tension or pretension, adapts itself to the surface of the metal electrode to be sealed (13) as a result of the high surface pressure.

3. Lip seal according to one of Claims 1 or 2, characterised in that the protective lip (7) is formed on a double lip seal which is roof-shaped in cross-section.

4. Lip seal according to one of Claims 1 to 3, characterised in that the ring flange (6) provided for fixing in the housing (17) is designed as an external multiple seal with several sealing edges (9, 10, 11) disposed one behind the other.

## Revendications

1. Joint à lèvres (1) sur une cellule électrochimique air-métal pour rendre étanche l'électrode métallique consommable (13) par rapport à la chambre d'électrolyte de la cellule, de manière que la face frontale (14) de l'électrode métallique (13) soit la seule surface de travail, ce joint étant constitué par une matière ayant l'élasticité du caoutchouc avec une arête d'étanchéité (4) à bord vif en avant duquel est formée une lèvre de protection (7), caractérisé en ce que la lèvre de protection (7) s'étend à l'état non soumis à un effort dans la même direction que l'arête d'étanchéité (4) et, à l'état monté, est repliée de 90° vers l'extérieur à partir de la direction suivant laquelle elle s'étend normalement, de manière à reposer sous sa propre précontrainte, à plat du côté du liquide, et avec une force d'appui superficiel élevée, sur l'électrode métallique (13) à rendre étanche, en ce que la lèvre de protection (7) est conçue comme une membrane en s'amincissant en coin vers l'extérieur et présente une longueur en saillie comprise entre 1/5 et 1/20 du diamètre de l'électrode métallique, en ce que le raccord entre la lèvre de protection (7) et l'arête d'étanchéité (4) est prévu avec une contre-dépouille (8) permettant le pliage et en ce qu'il est ainsi formé pour l'électrolyte une première chambre de saturation peu profonde (20) et une seconde chambre de saturation (22) qui s'y raccorde.

2. Joint à lèvres selon la revendication 1, caractérisé en ce que la lèvre de protection (7, 19) est réalisée en une seule pièce avec le joint à lèvres (1, 18) et s'ajuste avec une force d'appui superficiel élevée, en raison de sa contrainte propre ou de sa précontrainte, sur la surface de l'électrode métallique (13) à rendre étanche.

3. Joint à lèvres selon l'une des revendications 1 et 2, caractérisé en ce que la lèvre de protection (7) est réalisée sur un joint à deux lèvres à section en forme de toit.

4. Joint à lèvres selon l'une des revendications 1 à 3, caractérisé en ce que la bordure annulaire (6) prévue pour la fixation dans le carter (17) est conçue sous forme de joint extérieur multiple avec plusieurs arêtes d'étanchéité (9, 10, 11) disposées l'une derrière l'autre.

0 046 866

Fig 1

Fig 2

Fig. 3

Fig. 4

Fig. 5